# EUROPEAN PATENT SPECIFICATION

(11) **EP 3 615 407 B1**
(45) Date of publication and mention of the grant of the patent: **14.09.2022**
(21) Application number: 18790631.8
(22) Date of filing: 27.04.2018
(51) Int. Cl.: B62M 6/45, B62M 6/60, B62K 5/02, B62M 19/00

(54) **MOTOR CONTROL SYSTEM FOR MULTI-TRACK CYCLE WITH ELECTRIC TRANSMISSION AND ELECTRIC ASSISTANCE**
MOTORSTEUERUNGSSYSTEM FÜR MEHRSPURIGEN FAHRRAD MIT ELEKTRISCHEM GETRIEBE UND ELEKTRISCHER UNTERSTÜTZUNG
SYSTÈME DE COMMANDE DE MOTEUR POUR CYCLE À PLUSIEURS VOIES AVEC TRANSMISSION ÉLECTRIQUE ET ASSISTANCE ÉLECTRIQUE

(30) Priority: 28.04.2017 NO 20170709
(43) Date of publication of application: 04.03.2020
(73) Proprietor: PODBIKE AS, 4031 Stavanger (NO)
(72) Inventor: SØRENSEN, Per Hassel, 4307 Sandnes (NO)
(74) Representative: Håmsø Patentbyrå AS
(86) International application number: PCT/NO2018/050114
(87) International publication number: WO 2018/199773

(56) References cited:
- WO-A1-2007/090285
- WO-A1-2015/191536
- WO-A2-00/59773
- DE-A1-102013 012 208
- US-A- 3 598 195
- US-A1- 2003 217 874
- US-A1- 2011 056 756
- US-A1- 2012 168 242
- US-A1- 2013 081 892
- US-A1- 2014 353 055
- US-A1- 2016 121 963
- Per Hassel Sørensen: "VELOMOBILE: redefined. Constructing a unique human powered vehicle with electric assist, to save you & the world", MASTEROPPGAVE, 16 April 2014 (2014-04-16), pages 1-215, XP55751150, Denmark Retrieved from the Internet: URL:https://www.podbike.com/wp-content/upl oads/2020/10/Sorensen_Per_Hassel.pdf [retrieved on 2020-11-17]

## Description

The present invention relates to a motor control system for a multi-track cycle with electronic transmission and electric assistance. The invention also relates to a multi-track cycle comprising the motor control system. A multi-track cycle may be a velomobile.

Driving a car, the preferred personal transport mode of today, requires a lot of space, resources and energy while producing a lot of pollution during its use. It also minimizes physical exercise, which is required to maintain health and a sound body weight.

A bicycle would be a sustainable mode of transportation but is not in widespread use except in areas where cycling has been a priority before cars, such as in countries like Denmark and The Netherlands.

Some major problems with bicycles are:
- Lack of protection in case of collisions/accidents;
- Lack of weather protection;
- Inefficient aerodynamic design resulting in high air resistance at speed, and
- Instability on low-frictional surfaces (ice, wet leaves, pebbles on tarmac, etc.)

Some improvements have become available using velomobiles, i.e. recumbent bicycle with aerodynamic cover. But the added mass of the velomobile compared to regular bicycles makes electric assistance a necessity for most velomobile riders, at least in hilly terrain.

As most velomobiles use recumbent seating with propulsion on rear wheel or wheels, cycle chains become quite long, typically over 4 m. Such chains generate noise, require regular maintenance and limits design freedom. By using series hybrid propulsion as described in US7156780, the mechanical challenges are reduced, and the additional cost is not high. For an electrically assisted velomobile, the motor is already in place, further reducing cost.

In a series hybrid system, the cyclist pedals an electrical generator with electronically controlled resistance and speed. Propulsion is only by electric motor which is fed with power from a generator and from a battery. In this way no chain or gears are required, except for the fixed gearing to match pedal speed to generator speed, and possibly a fixed gear to match motor with wheel speed. This is a series hybrid as understood from the auto industry. Unfortunately,' hybrid' is easily misunderstood in the cycle world. The word 'hybrid' has already been in use for decades to describe a special type of bike being a mix between a practical city bike and a road racing cycle. For this reason, Electronic Transmission - ET - is used instead.

Electrically assisted cycles, or pedelec's, have some regulatory limitations to make them compatible with existing cycling infrastructure and to keep e-bike users in harmony with other cyclists. These regulations have now been harmonized within EU and EEA (EØS) with article 1(h) of Directive 2002/24/EC describing type-approval of two and three wheeled motor vehicles. This article states that type approval does not apply to:
"Cycles with pedal assistance which are equipped with an auxiliary electric motor having a maximum continuous rated power of 0.25 kW, of which the output is progressively reduced and finally cut off as the vehicle reaches a speed of 25 km/h, or sooner, if the cyclist stops pedalling"

Article 3 of same directive also states that: "This Directive shall also apply to quadricycles" so basically that limits a pedelec to:
- Human powered cycles with two to four wheels having pedal assistance;
- 250 watts (W) continuous maximum mechanical motor assistance power measured on the wheel;
- 25 km/h top speed with motor assistance, and
- Motor assistance only allowed when pedalling (not included in the directive, but motor assistance is allowed up to 6 km/h even when not pedalling. It is a logical consequence of EU/EEA general permission to use motorized vehicles with a max speed of up to 6 km/h on public streets without type approval).

A more thorough definition including test requirements is described in the European product safety standard for pedelecs (EN-15194 2011). Therein is also a reference to the standard used to measure continuous output power (IEC-60034-1 2005).

For a cycle with electronic transmission - ET, there is a risk that the motor power used for transmission is seen as circumventing the motor power limitation as pedelec. This can prevent the velomobile construction from being accepted as a cycle with electric motor assistance.

To avoid this from happening, a strict energy and speed control regime must be embedded in the design. The challenge is to still be compliant to the regulations for electrically assisted cycles. Otherwise the vehicle is no longer a street legal electric assisted pedal cycle.

The invention has for its object to provide a motor control system that enables a pedelec to have several motors, with a combined power output of more than 250W, but a maximum of 250W continuous mechanical motor assistance power from a battery. In other words, providing a motor control system such that a pedelec with more than 250W power output from the motors are compliant with European electric assisted cycles product safety standard EN 15194. US 2014/353055 discloses the preamble of claim 1.

The object is achieved through features, which are specified in the description below and in the claims that follow.

The invention is defined by the independent patent claim. The dependent claims define advantageous embodiments of the invention.

The invention relates to a motor control system for a multi-track cycle, the motor control system comprising:
- a pedal generator;
- a first drive motor and a second drive motor mechanically coupled to a respective wheel;
- an electric assistance battery for powering the first drive motor;
- an electronic transmission connecting the pedal generator to the second drive motor,
   wherein the second drive motor is connected to the electric assistance battery via a two-terminal electronic component, wherein the two-terminal electronic component is configured for transferring current primarily in one direction, said direction being from the second drive motor to the electric assistance battery.

Due to vehicle classification of electrically assisted cycles, the drive motor is limited in output power with various limits depending on national regulations. For EU and EEA, the limit is 250W maximum continuous mechanical power as measured on the wheel. Peak power however may be several times higher but only for very short durations, otherwise a 250W motor will be destroyed by internal heat generation. However, as power is torque times angular velocity of motor shaft, the le-gal torque limit at low speed is still quite high.

By using two motors on a four-wheeled series hybrid cycle, it is logical to use two identical propulsion motors driving each wheel to be able to have traction on two wheels while removing need for differential. Then each motor may be 250W and still be able to propel the vehicle at steep grades. By connecting the electric assistance battery directly to the first motor and having a two-terminal electronic component between the battery and the second motor, it is possible to control the current going to the second motor from the battery and thus limit assistance from the battery to 250W. The pedal generator should be understood as a generator driven by pedals. The generator may be mechanically connected to a foot pedal or a hand pedal.

In one embodiment, the two-terminal electronic component may be one of the group consisting of: a transistor, a diode and a relay. All three components solve the challenge of restricting current from the battery to the second motor. The components may selectively block a flow of current from the battery to the second motor. In one embodiment, the two-terminal electronic component may be a transistor. In one embodiment, the two-terminal electronic component may be a diode. In one embodiment, the two-terminal electronic component may be a relay.

In one embodiment, both the first drive motor and the second drive motor may be configured for regeneration of power to the electric assistance battery. This embodiment of the invention has the effect that regeneration/recuperation may be used for braking and charging of the battery. Charging the battery by regeneration increases the range of the vehicle. The first motor delivers power directly back to battery, while the second motor delivers power thru the two-terminal electronic component which now conducts as the voltage is higher on the second motor than on the battery.

When the generator is pedalled by a cyclist and the second motor does not consume all the generated power, the excess power is likewise used to charge the battery via the same two-terminal electronic component.

In one embodiment, the regeneration of power may be adjustable by a reverse pedalling motion of the pedal generator. During regeneration, speed of reverse pedalling may be used to control amount of brake current. This embodiment of the invention has the effect that the driver may adjust a braking force generated by the regeneration of power from the motors.

In one embodiment, the two-terminal electronic component may be electronically controllable, both drive motors being connected to the electric assistance battery via the two-terminal electronic component, enabling switch-over of a battery power from the first drive motor to the second drive motor. Enabling switch-over of battery power from one motor to the other has the effect that assistance from the battery is not lost in case of malfunctioning of the motor being powered by the battery. This way a limp-home fault tolerant solution may be implemented.

A reverse pedalling motion from a stand still position of the multi-track cycle causes the drive motors to rotate in an opposite direction. It may be intuitive that reverse pedalling at standstill makes the vehicle go backwards. Unfortunately, EN 15194 states that reverse pedalling shall not provide assistance-power. That is a major challenge as four wheeled series-hybrid velomobile really needs a reverse gear.

In one embodiment, the motor control system is connected to a front light and a rear light, each light being selectively red or white. This embodiment of the invention has the effect that a perceived forward direction of the velomobile may be changed. The front light may be white, and the rear light may be red when the cycle is standing still or moving forwards, whereby the front light and the rear light switch colour when the drive motors rotate in the opposite direction. This solves the issue concerning reversing referenced from EN 15194 above. The vehicle may reverse, but the reverse direction no longer being backwards, thus achieving the necessary reversing function. To maintain safety, reverse speed may be limited to 6 km/h.

In one embodiment, the drive motor powered by the electric assistance battery may be configured to deliver a maximum of 250 watts continuous mechanical power as measured on the respective wheel. This embodiment of the invention makes the motor control system compliant with the EUregulation referenced above.

The invention relates also to a multi-track cycle comprising the motor control system.

In the following is described an example of a preferred embodiment illustrated in the accompanying drawings, wherein:
- Fig. 1: shows schematically a motor control system in a multi-track cycle according to one embodiment of the invention;
- Fig. 2: shows schematically a flow of electric energy through motor control system in a forward propulsion-mode, and
- Fig. 3: shows schematically a flow of electric energy through the motor control system in a regeneration-mode.

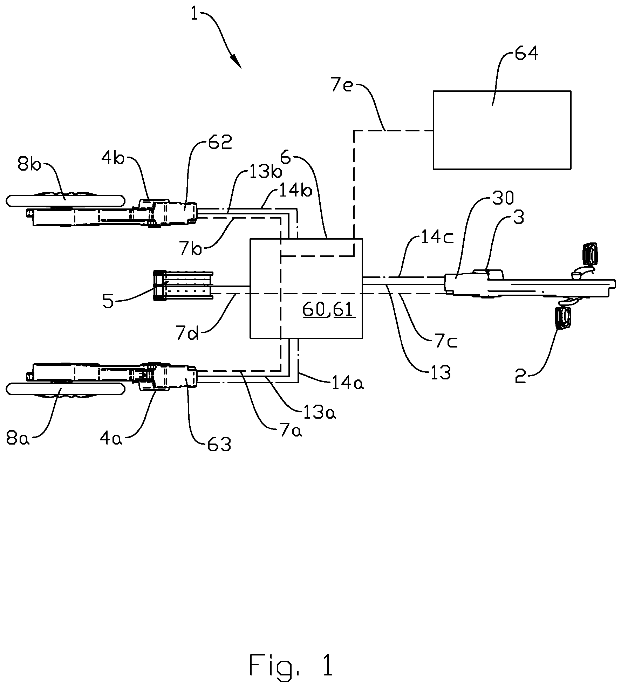

Figure 1 shows a basic arrangement of a motor control system 1 for a multi-track cycle according to the invention. The motor control system comprises a foot pedal 2 mechanically connected to a generator 3 such that pedaling energy is converted to electrical energy. The generator 3 is connected to a second drive motor 4b by an electric transmission 13, via a central controller 6. The central controller 6 comprises a control program 60 and a two-terminal electronic component 61 for controlling a flow of electric energy between the generator 3, an electric assistance battery 5 and the drive motors 4a, 4b.

The generator 3 further comprises a generator controller 30. The generator controller 30 registers information such as cadence, watts generated and speed.

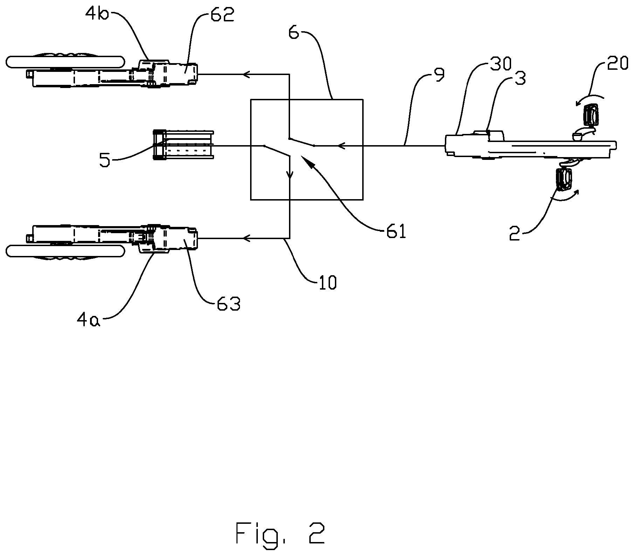

Each drive motor 4a, 4b drives one wheel 8a, 8b respectively. During a forward propulsion of the cycle, the first drive motor 4a is powered by the electric assistance battery 5, the second drive motor 4b is powered by current generated by the generator 3 from a forward action on the foot pedal 2. The two-terminal electronic component 61 is configured to restrict current flowing from the electric assistance battery 5 to the second drive motor 4b, but not the other way around (see also figure 2). This way the cycle may have two off 250W drive motors and still comply with the EUregulations, as only one drive motor 4a is propelled by electric energy from the electric assistance battery 5 and the other drive motor 4b is propelled by muscle power via the generator 3.

Each drive motor 4a, 4b is provided with a motor controller 62, 63 respectively. The motor controllers 62, 63 may receive data from the generator controller 30 via a data lines 7a, 7b, 7c. The motor control system 1 ensures that the cycle may only drive when there is voltage to the motor controllers 62, 63. Voltage is transferred via power lines 13, 13a, 13b between the central controller 6, the generator 3 and the drive motors 4a, 4b.

Control lines 14a, 14b, 14c transfer control signals between the central controller 6, the motor controllers 62, 63 and the generator controller 30.

Figure 1 further shows a user interface 64 communicating with the central controller 6 via a data signal 7e. The user interface 64 may be an application on a smartphone or a separate display with a touch panel.

In use, power from the battery 5 to the first drive motor 4a is gradually decreased as the speed of the cycle approaches 25 km/h., and power is cut off when the speed reaches 25 km/h. The continuous effect from the first drive motor 4a is limited to 250W. The second drive motor 4b will only be engaged when the generator 3 is generating current, i.e. the driver is pedaling. Power from the battery 5 to the first drive motor 4a will also be cut if the speed is above 6 km/t without pedaling. Meaning, the first drive motor 4a alone may only propel the velomobile up to 6 km/h.

Data such as revolutions and torque from the drive motors 4a, 4b is sent as data signals 7a, 7b to the central controller 6 to control for example speed, traction and anti-lock braking system (ABS).

Figure 2 shows how electric energy flows (represented by lines 9, 10) during forward propulsion of the cycle. A forward motion 20 of the pedals 1 sends a signal from the generator controller 30, via the central controller 6, to the motor controllers 62, 63 to start the drive motors 4a, 4b. Current generated by the generator 3 is sent via the two-terminal electronic component 61 to drive the second drive motor 4b. Current from the electric assistance battery 5 drives the first drive motor 4a.

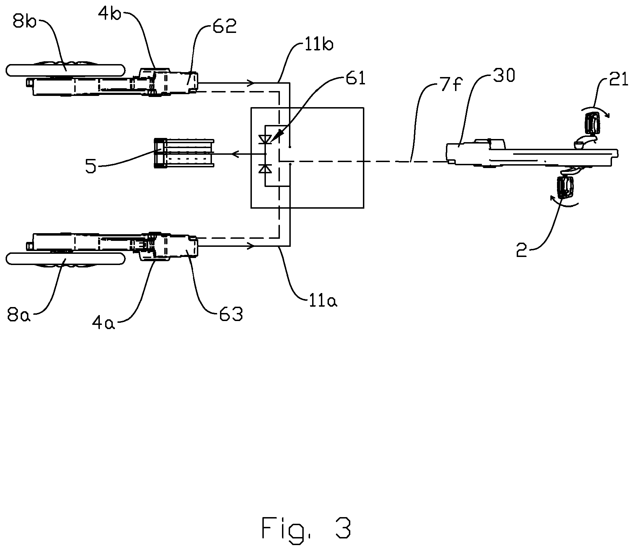

The two-terminal electronic component 61 is shown as a very simplified diode (see also figure 3). It should be noted that the two-terminal electronic component 61 may be a transistor or a relay in another embodiment.

Figure 3 shows how electric energy flows (represented by lines 11a, 11b) during regeneration. Regeneration is activated by pedaling backwards 21. The generator controller 30 sends a signal 7f to the motor controllers 62, 63 that the power from the drive motors 4a, 4b shall be negative (regenerative), thus the drive motors 4a, 4b generate electricity to charge the battery 5.

It should be noted that the above-mentioned embodiments illustrate rather than limit the invention, and that those skilled in the art will be able to design many alternative embodiments. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

Reference
1. Master thesis - "Velomobile: redefined", https://brage.bibsys.no/xmlui/handle/11250/219644

## Claims

1. A motor control system (1) for a multi-track cycle, the motor control system (1) comprising:
- a pedal generator (3);
- a first drive motor (4a) and a second drive motor (4b) mechanically coupled to a respective wheel (8a, 8b);
- an electric assistance battery (5) for powering the first drive motor (4a);
- an electronic transmission (7) connecting the pedal generator (3) to the second drive motor (4b),
wherein the second drive motor (4b) is connected to the electric assistance battery (5) via a two-terminal electronic component (61), wherein the two-terminal electronic component (61) is configured for transferring current primarily in one direction, said direction being from the second drive motor (4b) to the electric assistance battery (5), and
**characterised in that** a reverse pedalling motion from a stand still position of the multi-track cycle causes the drive motors (4a, 4b) to rotate in an opposite direction.

2. The motor control system (1) according to claim 1, wherein the two-terminal electronic component (61) is one of the group consisting of: a transistor, a diode and a relay.

3. The motor control system (1) according to claim 1 or 2, wherein both the first drive motor (4a) and the second drive motor (4b) are configured for regeneration of power to the electric assistance battery (5).

4. The motor control system (1) according to claim 3, wherein the regeneration of power is adjustable by a reverse pedalling motion of the pedal generator (3).

5. The motor control system (1) according to any of the preceding claims, wherein the two-terminal electronic component (61) is electronically controllable, both drive motors (4a, 4b) being connected to the electric assistance battery (5) via the two-terminal electronic component (61), enabling switch-over of a battery power from the first drive motor (4a) to the second drive motor (4b).

6. The motor control system (1) according to any of the preceding claims, wherein the motor control system (1) is connected to a front light and a rear light, each light being selectively red or white.

7. The motor control system (1) according to any of the preceding claims, wherein the drive motor (4a, 4b) powered by the electric assistance battery (5) is configured to deliver a maximum of 250 watts continuous mechanical power as measured on the respective wheel (8a, 8b).

8. A multi-track cycle comprising the motor control system (1) according to any of the preceding claims.

## Patentansprüche

1. Motor-Steuersystem (1) für ein Mehrspur-Rad, wobei das Motor-Steuersystem (1) aufweist:
- einen Pedalen-Generator (3);
- einen ersten Antriebsmotor (4a) und einen zweiten Antriebsmotor (4b), welche mechanisch gekoppelt sind an ein entsprechendes Rad (8a, 8b);
- eine elektrische Hilfsbatterie (5) zur Energieversorgung des ersten Antriebsmotors (4a);
- ein elektronisches Getriebe (7) zur Verbindung des Pedalen-Generators (3) mit dem zweiten Antriebsmotor (4b),
wobei der zweite Antriebsmotor (4b) über eine elektronische Doppelanschluss-Komponente (61) mit der elektrischen Hilfsbatterie (5) verbunden ist, wobei die elektronische Doppelanschluss-Komponente (61) ausgebildet ist, um Strom hauptsächlich in eine Richtung zu übertragen, wobei die besagte Richtung vom zweiten Antriebsmotor (4b) zur elektrischen Hilfsbatterie (5) ist, und
**dadurch gekennzeichnet, dass** eine Rückwärtsbewegung der Pedale von einer Stillstands-Position des Mehrspur-Rads die Antriebsmotoren (4a, 4b) dazu bewegt, in einer entgegengesetzten Richtung zu rotieren.

2. Motor-Steuersystem (1) gemäss Anspruch 1, wobei die elektronische Doppelanschluss-Komponente (61) ausgewählt ist aus der folgenden Gruppe: ein Transistor, eine Diode und ein Relais.

3. Motor-Steuersystem (1) gemäss Anspruch 1 oder 2, wobei sowohl der erste Antriebsmotor (4a) als auch der zweite Antriebsmotor (4b) ausgebildet sind, um die elektrische Hilfsbatterie (5) wieder mit Strom zu versorgen.

4. Motor-Steuersystem (1) gemäss Anspruch 3, wobei die Regeneration mit Strom durch eine Rückwärtsbewegung der Pedale des Pedalen-Generators (3) anpassbar ist.

5. Motor-Steuersystem (1) gemäss einem der vorhergehenden Ansprüche, wobei die elektronische Doppelanschluss-Komponente (61) elektronisch steuerbar ist, wobei beide Antriebsmotoren (4a, 4b) über die elektronische Doppelanschluss-Komponente (61) mit der elektrischen Hilfsbatterie (5) verbunden sind, wodurch eine Umschaltung eines Batteriestroms vom ersten Antriebsmotor (4a) zum zweiten Antriebsmotor (4b) ermöglicht wird.

6. Motor-Steuersystem (1) gemäss einem der vorhergehenden Ansprüche, wobei das Motor-Steuersystem (1) mit einem Vorderlicht und einem Rücklicht verbunden ist, wobei jedes Licht selektiv entweder rot oder weiss ist.

7. Motor-Steuersystem (1) gemäss einem der vorhergehenden Ansprüche, wobei der Antriebsmotor (4a, 4b), welcher durch die elektrische Hilfsbatterie (5) mit Strom versorgt wird, ausgebildet ist, um ein Maximum von 250 Watt kontinuierlicher mechanischer Leistung zu liefem, gemessen am entsprechenden Rad (8a, 8b).

8. Mehrspur-Rad, aufweisend das Motor-Steuersystem (1) gemäss einem der vorhergehenden Ansprüche.

## Revendications

1. Système de commande de moteur (1) pour un cycle multi-pistes, le système de commande de moteur (1) comprenant :
- un générateur de pédales (3);
- un premier moteur d'entraînement (4a) et un deuxième moteur d'entraînement (4b), qui sont couplés mécaniquement à une roue correspondante (8a, 8b) ;
- une batterie électrique auxiliaire (5) pour l'alimentation en énergie du premier moteur d'entraînement (4a) ;
- une transmission électronique (7) pour relier le générateur de pédales (3) au deuxième moteur d'entraînement (4b),
dans lequel le second moteur d'entraînement (4b) est connecté à la batterie électrique auxiliaire (5) par l'intermédiaire d'un composant électronique à double borne (61), le composant électronique à double borne (61) étant adapté pour transmettre le courant principalement dans une direction, ladite direction étant du second moteur d'entraînement (4b) à la batterie électrique auxiliaire (5), et
**caractérisé en ce qu'**un mouvement de pédale en sens inverse à partir d'une position d'arrêt du cycle multi-pistes amène les moteurs d'entraînement (4a, 4b) à tourner dans une direction opposée.

2. Système de commande de moteur (1) selon la revendication 1, dans lequel le composant électronique à double borne (61) est choisi dans le groupe suivant: un transistor, une diode et un relais.

3. Système de commande de moteur (1) selon la revendication 1 ou 2, dans lequel le premier moteur d'entraînement (4a) et le deuxième moteur d'entraînement (4b) sont tous deux conçus pour la réalimentation la batterie électrique auxiliaire (5).

4. Système de commande de moteur (1) selon la revendication 3, dans lequel la réalimentation est adaptable par un mouvement de pédale du générateur de pédales (3) en sens inverse.

5. Système de commande de moteur (1) selon l'une quelconque des revendications précédentes, dans lequel le composant électronique à double borne (61) peut être commandé électroniquement, les deux moteurs d'entraînement (4a, 4b) étant connectés à la batterie électrique auxiliaire (5) par l'intermédiaire du composant électronique à double borne (61), ce qui permet de commuter un courant de batterie du premier moteur d'entraînement (4a) au deuxième moteur d'entraînement (4b).

6. Système de commande de moteur (1) selon l'une quelconque des revendications précédentes, dans lequel le système de commande de moteur (1) est connecté à un feu avant et à un feu arrière, chaque feu étant sélectivement soit rouge, soit blanc.

7. Système de commande de moteur (1) selon l'une quelconque des revendications précédentes, dans lequel le moteur d'entraînement (4a, 4b) alimenté par la batterie électrique auxiliaire (5) est adapté pour fournir un maximum de 250 watts de puissance mécanique continue mesurée sur la roue correspondante (8a, 8b).

8. Cycle multi-pistes comprenant le système de commande de moteur (1) selon l'une quelconque des revendications précédentes.
